# EUROPEAN PATENT APPLICATION

(11) **EP 1 055 549 A1**
(43) Date of publication of application: **29.11.2000**
(21) Application number: 00111295.2
(22) Date of filing: 25.05.2000
(51) Int. Cl.: B60N 2/16, B60N 2/225

(54) **Seat height adjuster**

(30) Priority: 27.05.1999 GB 9912323
(71) Applicant: Autoseat Technologies Limited, Stanway, Colchester, Essex C03 5JN (GB)
(72) Inventor: Shephard, Philip Charles, Hall Green, Birmingham B28 0QR (GB)
(74) Representative: Raynor, Simon Mark

(57) **Abstract**

A height adjuster for a vehicle seat and a vehicle seat incorporating such an adjuster is disclosed. The adjuster includes a plurality of rotary (preferably, planetary) gearboxes (64,66) to regulate the height of a seat frame (62). Embodiments are disclosed that use two of such gearboxes and that use four of such gearboxes. The gearboxes may be mounted on a slide (60) associated with the seat. In such embodiments, the gearboxes may have a lift arm (32) connected to the frame (62) optionally through a link (46). In alternative embodiments, the gearbox is carried on the seat frame and connected to the slide through a lift arm. The seat frame (62) may be further supported by a pivotable link to effect raising and lowering of the frame (62).

## Description

The present invention relates to vehicle seats. Particularly, but not exclusively, it relates to a height adjustment system for a vehicle seat.

When a vehicle is first conceived, the positions of all its important parts and the position of the occupant are decided. This is known as the "packaging plan" of the vehicle. An important part in the packaging plan is known as the "eye ellipse". Every seated driver's eyes must lie within this eye ellipse regardless of height or sex. Considerations that define this eye ellipse are visibility forwards, backwards and sideways. Positioning of the steering wheel and instruments also rely on the eye ellipse. Most important are the positions of the vehicle control pedals, which must easily be operated by a driver.

It is apparent that if the eye must lie within the eye ellipse and the feet must make contact with the pedals, then the position of the vehicle seat is most important. Normally, a vehicle is designed to cater for a range of people varying from as small as 5% to as large as 95% of the population. What this means is that none but the smallest 5% and the largest 5% of the world's population is excluded from using the vehicle by limitations imposed by the packaging and the design of the vehicle. This means that 90% of the population must be comfortably accommodated, and in that 90% are a wide range of shapes and sizes of people. Statistically, the proportions of the average male have been recorded and 2D models of this man made; the model is known as the 50% male. It is with this model seated, that the position of the seat is fixed in the packaging plan.

When positioning a seat within a vehicle, the most important measurements are the torso length and the leg length of a person. Both of these measurements radiate from a common point; the centre of the hip joint. On a 3 dimensional manikin this is referred to as the "H-point". Alternatively, in seat design, the point is referred to as the "Seat Reference Point" or "SRP".

It can now be appreciated that the seat must be capable of adjusting the 'H' point of a seated occupant, forwards and backwards from the SRP point. The same 'H' point must adjust upwards and downwards from the same SRP point. These adjustments are to cater for the variations in leg and torso lengths in 90% of the world's adult population.

Most commonly, a tall man has long legs and a short woman has short legs, so a seat is installed such that when the seat is adjusted forwards it rises, and when it is adjusted to the rear it lowers. This common relationship is, however far from universal. Many people having adjusted their heel point correct to the pedals, find they must adjust the seat base upwards or downwards to keep their eyes within the eye ellipse. It is therefore imperative that a well-designed drivers seat must incorporate a safe and functional height adjuster.

It is often the case that a small occupant will, having adjusted forwards and upwards to meet the eye ellipse criteria, find that his or her knees are too high to enable their foot to rest comfortably on the floor and operate the pedals. In this case it is desirable to be able to lower the seat cushion at the front (the cushion being the part of the seat that one sits on). This can be achieved by building suitable functionality into a height adjuster or by providing an independent cushion tilt mechanism.

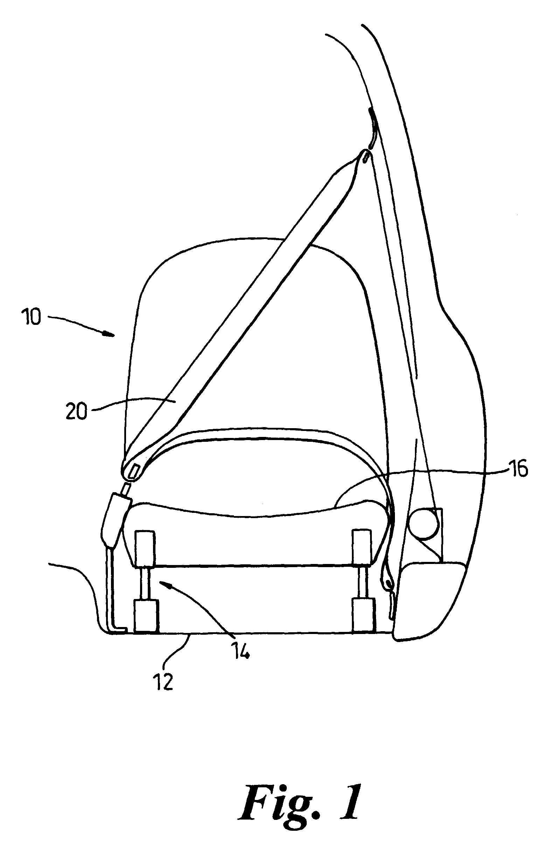

The configuration of vehicle seat belts also affects the design of vehicle seat height adjusters. In a first configuration, as shown in Figure 1, the seat belt fixing points are mounted directly to the vehicle body. In frontal crash, the load path is passed through the seat belt into the vehicle body. This means that the slides and height adjuster can be made comparatively light and inexpensive. However, this system has significant disadvantage for safety, so its use is declining.

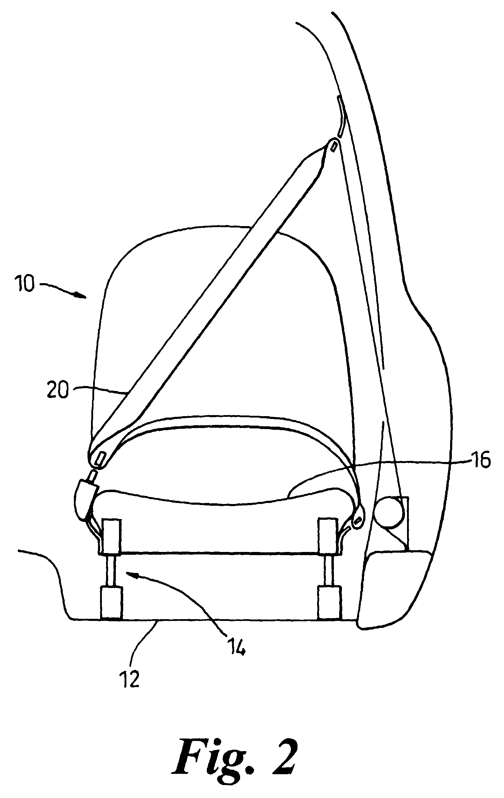

In most cars now made, both ends of the lap belt are mounted directly to the seat cushion frame, as shown in Figure 2. This ensures that a more nearly ideal belt position is available for all occupants. However, as will be apparent, the seat belt load path now passes through the seat structure. In an accident, the amount of this load can transiently be as high as 50g. Even though such a load will be experienced for only part of a second, this does mean that a force of many tonnes may be applied to the seat in a frontal crash in a forwards and upwards direction. To resist this force, the slides, seat frame and especially the height adjuster need to be made much stronger as failure of any of them could result in the occupant's death.

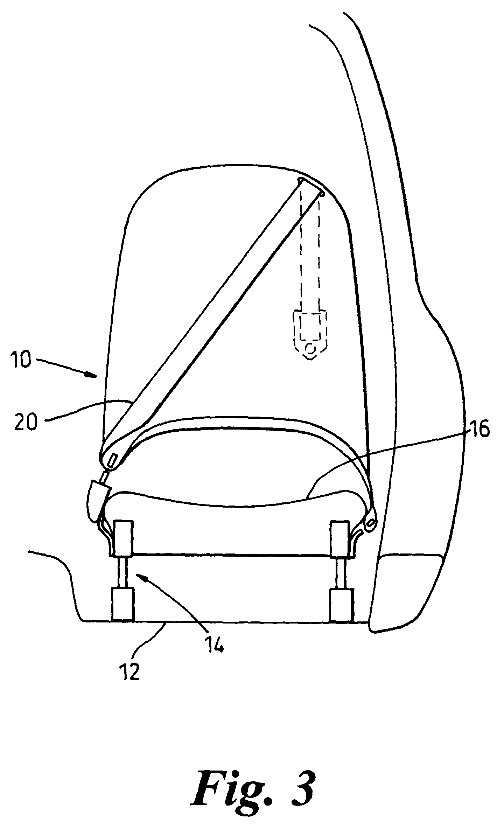

A third type of seat belt configuration, which is becoming more common, is known as "belt integrated". It is most usually found in coupés and Roadsters and is illustrated in Fig 3. This configuration is necessary when the vehicle body does not provide a structure on which to mount the shoulder exit point. What is necessary here is to integrate the shoulder exit point within the squab of the vehicle seat. This means however, that none of the three fixing points of the seat belt are attached to the vehicle structure. Consequently the load path of each belt mounting point is passed to the vehicle body though the seat mounting apparatus, which must be made suitably strong.

As referred to herein, a height adjuster is a mechanism situated between seat slides and a cushion frame to raise or lower the frame. Typically, it will be equipped for manual or electrical operation.

An aim of the invention is to provide a height adjuster that is capable of providing required strength in a structure that is compact, lightweight and that can be readily manufactured.

From a first aspect, the invention provides a height adjuster for a seat, the height adjuster including a rotary gearbox operable to adjust a height between a seat base and a seat slide.

A rotary gearbox can be constructed as a strong and compact assembly that can provide the strength necessary for use in a height adjuster in an advantageously small package.

Advantageously, the gearbox is an infinitely-variable gearbox. That is to say, it can be continuously adjusted between extreme limits of movement.

In particularly preferred embodiments, the gearbox is a planetary gearbox. Such a gearbox (also known as an epicyclic gearbox) can provide a particularly strong gearbox in an advantageously small package. However, other forms of rotary gearbox may also be used.

Typically, in a height adjuster embodying the invention, the planetary gearbox has a projecting lift arm that can be driven for angular movement about an axis. The lift arm can by connected to a component of the seat or to another component to effect raising and lowering movement.

Advantageously, a height adjuster further includes stop formations that limit the extent of angular movement of the lift arm. Such formations can be of very high-strength to limit movement of the seat in the event of failure of the gearbox. For example, the stop formations may include a slot that passes through the lift arm and a blocking member (e.g. a rivet) that projects through the slot.

In a first configuration, the rotary gearbox is mounted onto a slide associated with the seat. Typically, a lift arm will be connected to the seat through a connecting link.

In an alternative configuration, the rotary gearbox is mounted on a seat frame member. Typically, a lift arm will be connected to a slide associated with the seat.

A height adjuster embodying the invention may have a plurality of rotary gearboxes for independent control of the height of the front and the rear of the seat. This provides a highly versatile system that a user can use to control the angle of a seat cushion. Typically, such a system will have four rotary gearboxes.

Alternatively, in a height adjuster embodying the invention, one or more rotary gearbox controls the height of either the front or the rear of the seat and a linkage controls the other of the front or rear of the seat. This is a compact and less expensive configuration for a height adjuster. Such an embodiment may include two rotary gearboxes. In such embodiments, the linkage may cause an adjacent part of the seat to rise at a rate greater or lesser than the rate of rise caused by the rotary gearbox.

A height adjuster embodying the invention may have a power drive for operating the planetary gearbox, and/or it may have a manipulation formation (such as a rotatable handle) for manual operation of the planetary gearbox.

From a second aspect, the invention provides a vehicle seat that includes height adjuster embodying the first aspect of the invention.

From another aspect, the invention provides a vehicle seat including a height adjuster system, the system including mounting means for mounting the system on the vehicle floor, support means for supporting the vehicle seat and a height adjuster mechanism connected between the mounting means and the support means for adjusting the height of the vehicle seat, the height adjuster mechanism including a drive mechanism that includes a planetary gearbox.

Embodiments of the invention will now be described in detail, by way of example only, and with reference to the accompanying drawings, in which:
Figures 1 to 3 illustrate configurations of a seat belt and a seat in a vehicle;
Figures 4A to 4E are various views of a planetary gearbox assembly being a component of an embodiment of the invention;
Figure 5 is a side view of a seat height adjuster being a first embodiment of the invention;
Figure 6 is a diagram illustrating a range of movement of the height adjuster of Figure 5;
Figure 7 is a side view of a seat height adjuster being a second embodiment of the invention;
Figure 8 is a side view of a seat height adjuster being a third embodiment of the invention;
Figure 9 is a side view of a seat height adjuster being a fourth embodiment of the invention; and
Figure 10 is a section along line A-A of Figure 9.

With reference first to Figures 1 to 3, various commonly used configurations of a seat in a vehicle are shown. These have already been discussed briefly, and will now be described in greater detail.

A vehicle seat 10 is carried on the floor 12 of a vehicle by a mounting assembly shown generally at 14. The mounting assembly 14 includes slides that run generally longitudinally of the vehicle, whereby the fore-and-aft position of the seat 10 can be adjusted. The mounting assembly further includes a height adjuster disposed between the slides and a frame of a cushion 16 of the seat 10. The height adjuster provides for adjustment of the vertical position of the seat.

The various configurations of a seat belt 20 can also be seen in Figures 1 to 3, but these will not be described further.

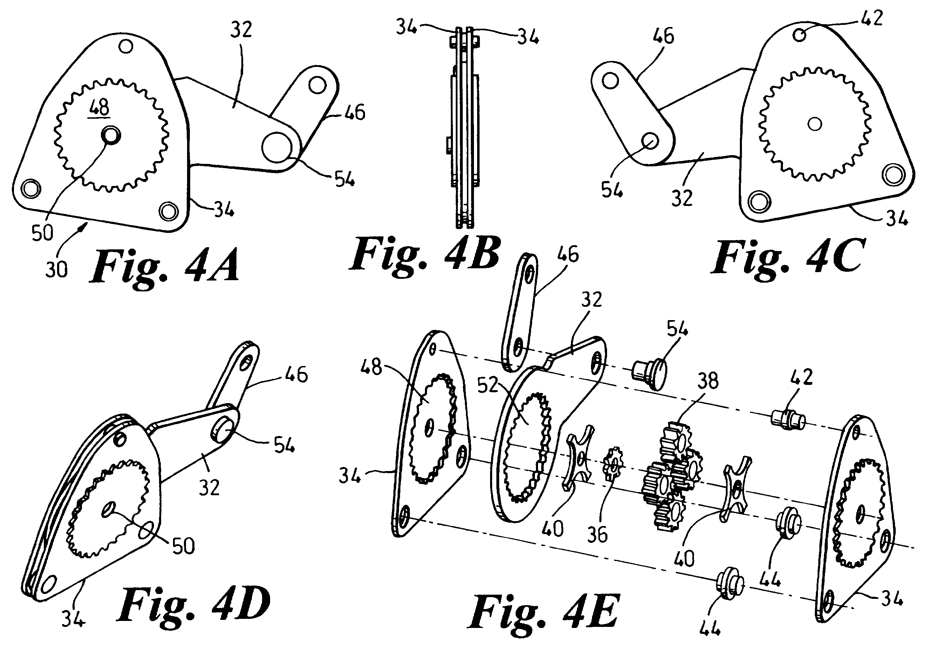

In Figures 4A to 4E there is shown a planetary gearbox assembly that constitutes a rotary gearbox included in a typical embodiment of the invention.

The basic functionality of the gearbox assembly is to provide a body portion 30 that can be secured to a first structural member and a lift plate 32 that can be moved in angular relation to the body portion 30 by operation of an electrical or manual control.

The gearbox includes the following components: a lift plate 32, two side plates 34, a drive gear 36, four planetary gears 38, two cruciform elements 40, a shouldered rivet 42, and spacers 44. The disposition of these components will now be described.

The two side plates 34 are formed as identical metal pressings. A central region of each plate 34 is partially sheared to form a recess 48 (and a corresponding projection on the opposite side of the plate). The recess 48 is formed to have a plurality of inwardly-directed gear teeth around its periphery. (Twenty-seven teeth are provided in this embodiment.) An aperture 50 is formed through each plate 34 centrally of the recess 48. In the assembled gearbox, the plates 34 are disposed with the recesses 48 facing one another to form a gear cavity.

The lift plate 32 is formed as a steel pressing. It includes a gear portion that has an arcuate outer periphery and a through-sheared gear aperture 52 having internal gear teeth, in this embodiment, thirty-one in number. The pitch circles of the teeth on the side plates 34 and the gear aperture 52 are substantially the same, and, in the assembled gearbox, concentric. An arm portion extends radially from the gear portion of the lift plate 32.

The planetary gears 38 and the drive gear 36 have external teeth. In addition, the drive gear 36 has an axial bore that has drive formations such as a plurality of splines.

The cruciform elements 40 each comprise four arm portions that radiate from a central core portion. The arms together define four arcuate concave surfaces of a radius approximately the same as the radius of the planetary gears.

In the assembled gearbox, the planetary gears 38 are disposed within the gear cavity in mesh with the internal gear teeth of the plates 34 and the gear aperture 52. The cruciform elements 40 maintain the planetary gears 38 in mesh and in proper relative positions with respect to one another. The drive gear 36 is disposed between the cruciform elements 40, positioned on an axis that coincides with the centre-line of angular movement of the lift arm 32 (and centre-line of mechanism) and in mesh with the planetary gears.

In this embodiment, the two side plates 34 are mechanically fixed to each other in three places by the spacers 44 and the shouldered rivet 42. The spacers 44 and the shouldered rivet 42 maintain the side plates 34 spaced apart by the thickness of the lift plate 32 plus some working clearance. The shouldered rivet 42 is peened over both side plates 34 and main fixing bolts (not shown) pass through the spacers 44, to effectively clamp the assembly together in three places.

Attached to the arm portion of the lift plate 32 is a drop link 46, pivotal connection being made by a shouldered rivet 54.

In order to operate the gearbox, a shaft is passed through the apertures 50 in the plates 34 to engage within the bore of the drive gear 36. Rotation of the shaft (for example, by means of an electric motor through a reduction gearbox or by manual means) rotates the drive gear 36 which, in turn, drives the planetary gears in orbital rotation 38. In turn, rotation of the planetary gears 38 in mesh with the teeth of the side plates 34 and the lift plate 32 causes the lift plate 32 to rotate about the axis of the gearbox. It should be noted that rotation of the lift plate occurs because the lift plate 32 has in this embodiment four more teeth than the side plates 34. As the planetary gears 38 rotate, this causes an incremental rotation of lift plate 32 relative to the side plates 34. In this embodiment, the angular movement of the lift plate 32 relative to the side plates 34 is approximately 11.6% per revolution of the drive gear 36.

It should also be appreciated that the planetary gears 38 span from one side plate 34 to the other and are enmeshed with the teeth on both. The planetary gears 38 are simultaneously also enmeshed with the lift plate 32. Each tooth on a planetary gear 38 has two shear points. There is a minimum of two teeth at any one time in contact with both side plates 34 and the lift plate 32. This means that there are four shear points on every planetary gear. With four planetary gears 38, there is a total of 16 shear points carrying the load through the gearbox. With this number of shear points spread around the periphery of the tooth form it will be readily appreciated that the mechanism will resist large breaking forces in a compact assembly. This means that a height adjust system fitted with planetary gearboxes will withstand higher crash loads front and rear than most conventional adjust systems.

Many different configurations are possible when one applies a planetary gearbox (for example, as described above) to make a seat height adjuster. Several such configurations will now be described.

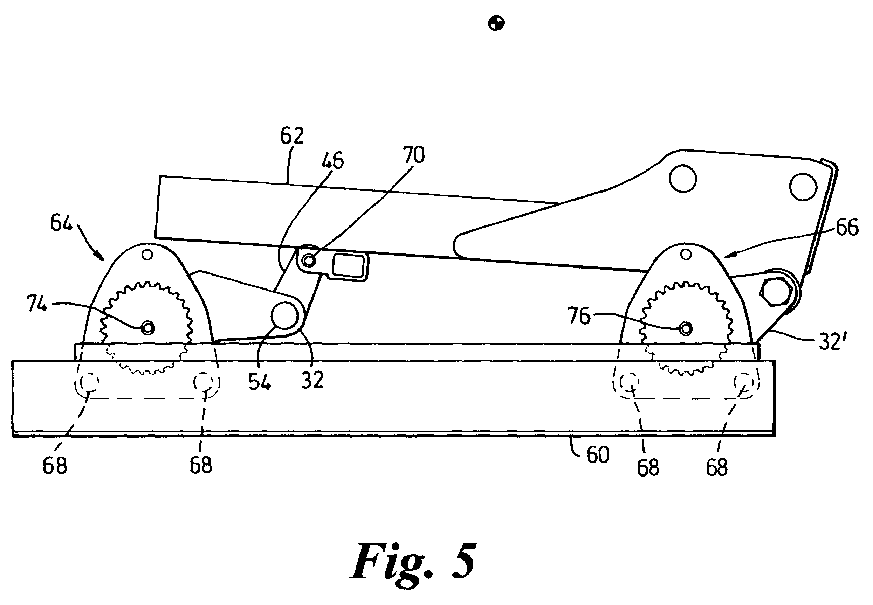

Figure 5 shows a side view of a seat height adjuster being a first embodiment of the invention. (A similar arrangement is provided at the other side of the seat.) The seat includes a frame 62 on which the cushion is carried. The frame is carried on a mounting assembly that comprises two longitudinal slides 60 one disposed towards each side of the seat. A height adjuster carries the frame 62 on the slides 60.

The height adjuster includes a front gearbox 64 and a rear gearbox 66 on each slide. The front gearbox is substantially as described with reference to Figures 4A to 4E, above. The rear gearbox 66 has a similar internal construction, but has a modified lift plate 32', which will be described below.

Each gearbox 64,66 is secured to a slide by fixings 68 which in this embodiment are bolts. It could alternatively be secured by riveting or welding. The link 46 interconnects the lift plate 32 of the front gearbox 64 to the seat frame 62, where it is pivotally connected by a strong metal pivot pin 70. In the case of the rear gearbox, the lift plate 32' has a shorter lift arm portion. A crossmember 72 is secured to the frame 62 in the region of connection of the link 46.

A common shaft 74 interconnects the drive gears 36 of the two front gearboxes 64, and another common shaft 76 interconnects the drive gears 36 of the two rear gearboxes 66. This arrangement ensures that the two front gearboxes operate in synchronism, as do the two rear gearboxes.

Positioned along each drive shaft 74,76 is an electric motor with a reduction gearbox, which can rotate the shaft in both directions. It can now be readily appreciated that if both motors were to be electronically (or otherwise) controlled then the seat can be raised and lowered under the influence of these electric motors.

It can now also be appreciated that as the mechanism at the front has a longer lift arm than the rear then further travel of the lift arm is possible thus enabling the seat frame to be raised or lowered at the front in any height adjust setting.

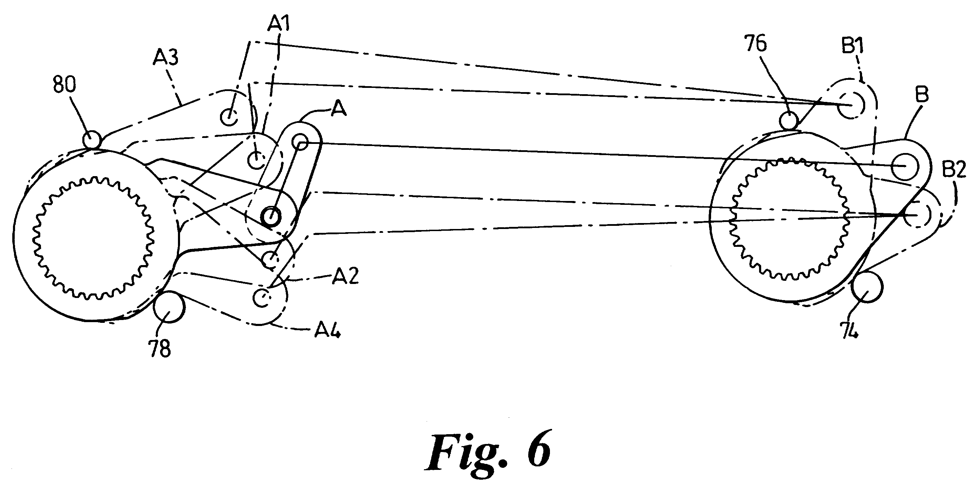

Figure 6 shows the diversity of adjustments that are possible with the adjuster mechanism described above. It can be seen that both arms are limited in movement between, in the rear gearboxes 66, a shouldered rivet 74 and a spacer 76. In the front gearbox, extremes of movement of the lift arm are angularly controlled by a rivet 78 and a spacer 80.

When the seat is in position SRP, the front lift plate 32 and link 46 lie in a position marked A and the rear lift arm in a position marked B. To raise the seat, both arms 32,32' can raise to the position in the front marked A1 and in the rear marked B1. To lower the seat, both arms 32,32' can lower to the position in the front denoted by A2 and in the rear B2. This raises and lowers the seat in a parallel fashion to enable the occupant to position his or her eyes in the eye ellipse.

If it is desired that the front of the seat cushion is to be raised or lowered to comfortably reach the pedals then further adjustment is provided. As shown in Figure 6, the front gearbox 64 can be driven to position A3. This lifts the front of the cushion, so raising the cushion angle by up to 4 degrees. This depends on the comfort requirements of the occupant. Conversely, the front gearbox 64 can be driven to point A4 to tilt the seat to a fully lowered position in which it is further tilted down by about 4 degrees. Of course the seat can be tilted by up to 4 degrees from this low position. Indeed, the seat can be adjusted up to 4 degrees up and down from any height.

This very comprehensive range of adjustments is ideally suited for 90% or more of the world's population.

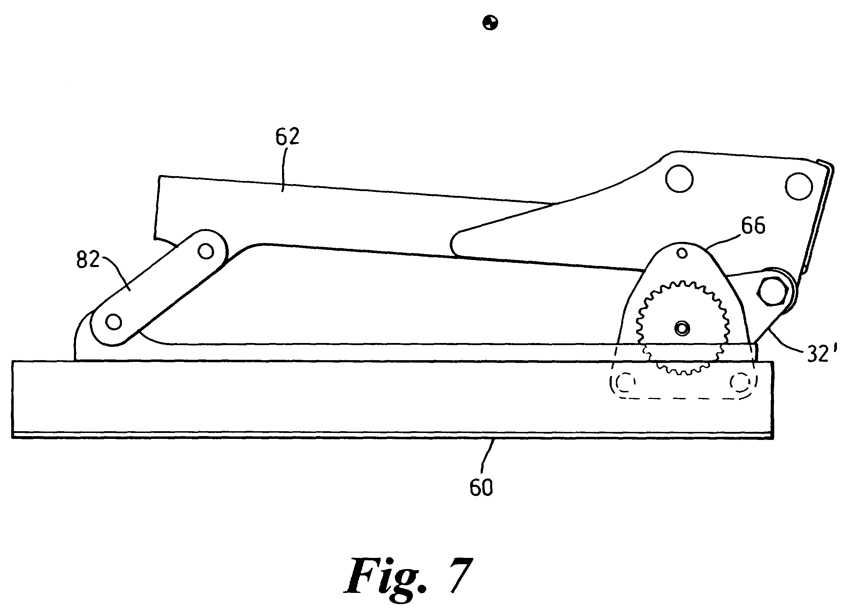

A further embodiment of the invention is illustrated in Figure 7.

Another means for achieving a lowering of the cushion at the front to suit a person with short legs is to build a lowering feature into the height adjuster system. The embodiment of Figure 7 is such a system.

As the strength of the gearbox of Figure 4 are very great, it is possible to dispense with such mechanisms at the front and rely on the rear mechanisms to adequately support the seat. It can be seen that each of front gearboxes has been replaced by a respective front arm 82, the drop arm being omitted. Each front arm 82 is connected to the slide 60 and the frame 62 for pivoting about a transverse axis.

It can now be readily appreciated that as the rear gearbox 66 is raised or lowered, the front arm 82 is rotated, thus raising and lowering the frame 62 at the front.

By selecting a suitable length of the front arm 82 relative to the arm portion of the gearbox lift plate 32', and by selecting a suitable angle between the centres of both arms, the kinematics of the seat can be adjusted as required. As illustrated, the front arm 82 has a radius of rotation greater than that of the lift plate 32'. The effect of this is that, as the cushion frame goes from fully down to fully up, the cushion frame rises more at the rear than at the front. This change in geometry is very helpful to adapt the seat for use by short and long legged occupants.

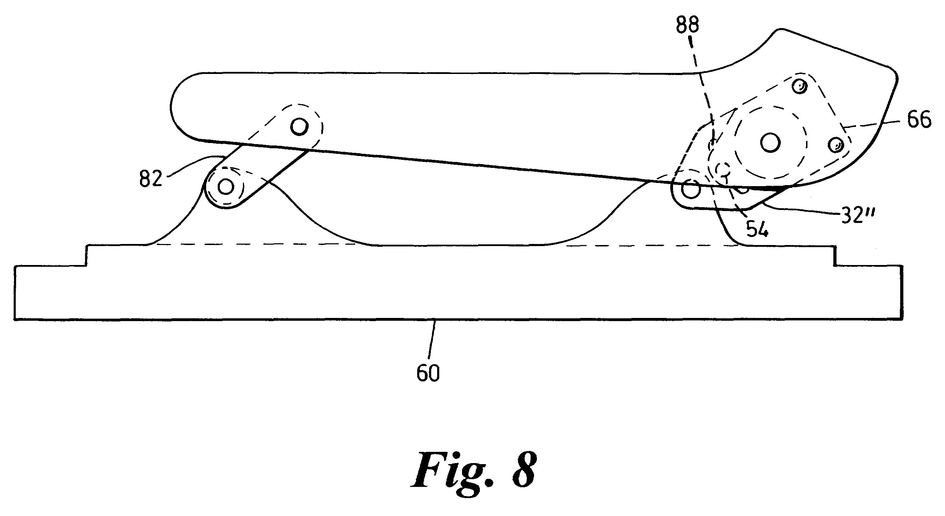

Another embodiment of a non-parallel height adjuster is shown in Figure 8. The main difference between the systems of Figures 7 and 8 is that, in the latter, the body portion of the rear gearbox is attached to the cushion frame 62 and not to the slide 60. This might be done, for example, if there would be an advantage to package the mechanism in the seat. The geometry would be substantially unaltered from that shown in Figure 7.

In the embodiment of Figure 8, the shape of the lift plate 32'' is different from that in the embodiment of Figures 4A to 4E. The lift arm 32'' has a slot 88 pierced through it. The rivet 54 is passed through the slot 88 to serve to limit the range of movement of the lift arm 32''. It has been found that this arrangement has a very high strength of failure.

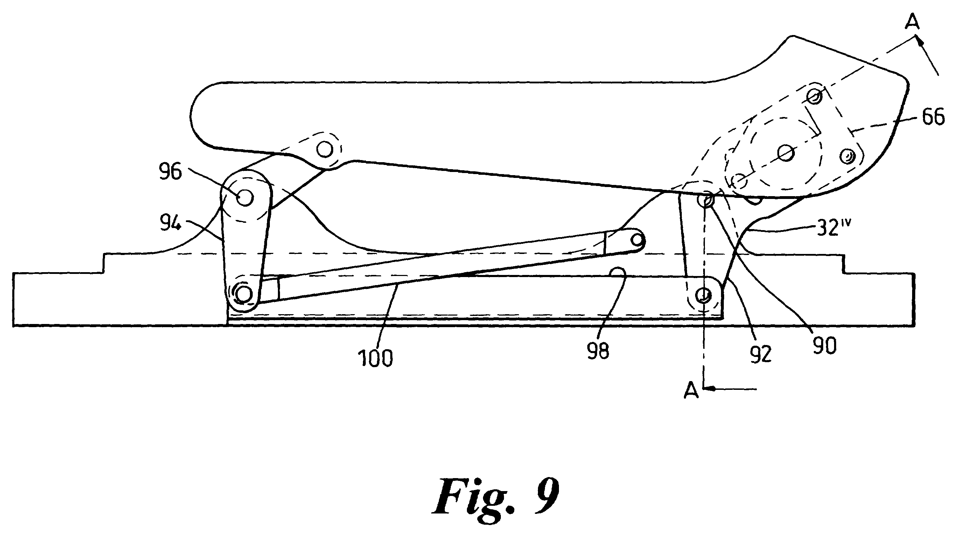

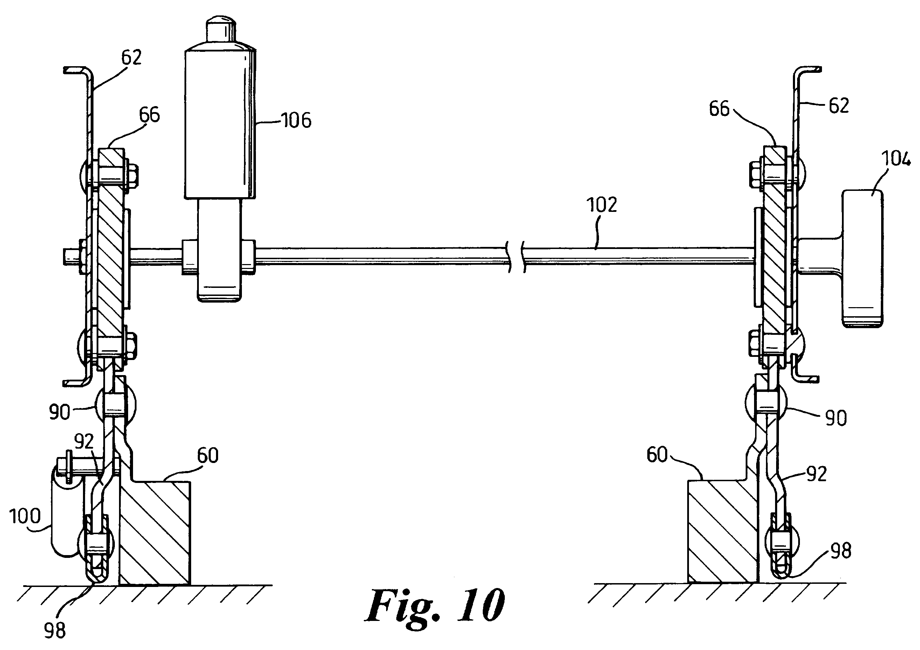

A further embodiment of the invention is shown in Figures 9 and 10. This embodiment can be considered to be a modification of that shown in Figure 8.

Should a seat be required with a parallel action lift and with a single gearbox, then a configuration as shown in Figure 9 might be adopted.

The rear gearbox 66 is mounted to the cushion frame in a manner similar to that described with reference to Figure 8. However, the central lift plate 32^{IV} is extended downwards, past its pivot at 90 to form a drop arm portion 92. This can readily be seen in Figure 9. At the front is a front leg and drop arm 94 mounted to the slide 60 by a pivot at 96. The spacing and angles of the pivot axes of the front leg 94 are the same as those of the lift plate 32^{IV} of the rear gearbox 66.

A connecting link 98 extends between the lower end portions of both the front and rear drop arms 92,94, being pivotally connected to each of them for movement about a transverse axis. As this connecting link 98 is pushed forwards and backwards under the influence of the rotary gearbox 66, the front leg and drop arm 94 is caused to rotate simultaneously by the connecting link 96. The angle of rotation of the front arm 94 will be substantially identical to that of the lift plate 32^{IV}, with the result that the front and rear of the seat will rise together.

Also depicted in Figure 9 is a typical assistance spring 100 the purpose of which is to reduce the load on the electric motor or against an operator's manual effort when an occupant is sitting on the seat and wishes to adjust the height.

A section A-A is shown in Figure 9. The section is depicted in Figure 10. This section is shown in simplified form but one can see both sides of the seat joined by a connecting drive shaft 102. Also shown is a handwheel 104 for manual operation and an electric motor 106 for powered operation (however, these will not normally be provided together on any one embodiment). One can see the cushion frames 62 with the gearboxes 66 affixed. The slides 60, the drop arm portion 92 and its pivotal mount 90, the connecting link 98 and the assistance spring 100 can also be seen.

## Claims

1. A height adjuster for a seat, the height adjuster characterised by a rotary gearbox (64,66) operable to adjust a height between a seat base (62) and a seat slide (60).

2. A height adjuster according to claim 1 in which the rotary gearbox is an infinitely-variable gearbox.

3. A height adjuster according to claim 1 or claim 2 in which the rotary gearbox is a planetary gearbox.

4. A height adjuster according to any preceding claim in which the rotary gearbox has a projecting lift arm (32) that can be driven for angular movement about an axis.

5. A height adjuster according to claim 4 which further includes stop formations (78,80;54,88) that limit the extent of angular movement of the lift arm.

6. A height adjuster according to claim 5 in which the stop formations include a slot (88) that passes through the lift arm (32) and a blocking member (54) that projects through the slot.

7. A height adjuster according to any preceding claim in which the rotary gearbox is mounted onto a slide (60) associated with the seat.

8. A height adjuster according to any one of claims 1 to 6 in which the rotary gearbox is mounted on a seat frame member (62).

9. A height adjuster according to any preceding claim having a plurality of rotary gearboxes for independent control of the height of the front and the rear of the seat.

10. A height adjuster according to claim 9 having four rotary gearboxes.

11. A height adjuster according to any one of claims 1 to 8 in which one or more rotary gearbox controls the height of either the front or the rear of the seat and a linkage (82) controls the other of the front or rear of the seat.

12. A height adjuster according to claim 11 in which the linkage causes an adjacent part of the seat to rise at a rate greater or lesser than the rate of rise caused by the rotary gearbox.

13. A height adjuster according to claim 11 or claim 12 having two rotary gearboxes.

14. A height adjuster according to any preceding claim having a power drive (106) for operating the rotary gearbox.

15. A height adjuster according to any preceding claim including a manipulation formation (104) for manual operation of the rotary gearbox.

16. A vehicle seat including a height adjuster according to any preceding claim.

17. A vehicle seat (10) including a height adjuster system, the system including mounting means (14) for mounting the system on the vehicle floor (12), support means for supporting the vehicle seat and a height adjuster mechanism connected between the mounting means and the support means for adjusting the height of the vehicle seat the height adjuster mechanism including a drive mechanism that includes a rotary gearbox (64,66).

18. A vehicle seat according to claim 17 in which the gearbox is a planetary gearbox.
